Europäisches Patentamt

European Patent Office

Office européen des brevets

(11) Veröffentlichungsnummer: **0 438 768 A1**

## (12) EUROPÄISCHE PATENTANMELDUNG

(21) Anmeldenummer: 90125320.3

(51) Int. Cl.5: **G09F 13/18**

(22) Anmeldetag: 22.12.90

(30) Priorität: 26.01.90 DE 9000867 U
24.08.90 DE 4026870

(43) Veröffentlichungstag der Anmeldung:
**31.07.91 Patentblatt 91/31**

(84) Benannte Vertragsstaaten:
**AT BE CH DE DK ES FR GB IT LI NL SE**

(71) Anmelder: **marketing-displays
Produktionsgesellschaft für Werbe- und
Verkaufsförderungssysteme mbH
Im Gewerbegebiet 17
W-5000 Köln 71(DE)**

(72) Erfinder: **Allekotte, Heinz, Dr.
Pestalozzistrasse 28
W-5000 Köln 71(DE)**

(74) Vertreter: **Hilleringmann, Jochen, Dipl.-Ing. et
al
von Kreisler-Selting-Werner,
Deichmannhaus am Hauptbahnhof
W-5000 Köln 1(DE)**

(54) **Leuchtbox.**

(57) Eine Leuchtbox zur Hinterleuchtung von Plakaten und Diapositiven weist einen Kasten (1) auf, der mindestens eine langgestreckte Lampe (9) enthält. An der Vorderseite des Kastens befindet sich eine Diffusionsscheibe (7), vor der ein lichtdurchlässiges Plakat angebracht wird. Die Rückwand (2) des Kastens (1) weist an ihrer Innenseite eine Reflektorfläche (8) auf, die parallel zu der Diffusionsscheibe (7) verläuft. Zwischen der Reflektorfläche (8) und der Diffusionsscheibe (7) ist ein Lichtleitelement angeordnet, dessen Lichteintrittsseite (11) der Lampe (9) zugewandt ist und dessen Stärke sich mit zunehmendem Abstand von der Lampe (9) verringert. Das keilförmige Lichtleitelement besteht aus mehreren übereinandergestapelten und parallel zueinander angeordneten plattenförmigen Lichtleitern (13), die schräg zu der Reflektorfläche (8) verlaufen. Die Lichtleiter bewirken eine gleichmäßige Ausleuchtung der Diffusionsscheibe bei hoher Leuchtdichte.

EP 0 438 768 A1

FIG.1

## LEUCHTBOX

Die Erfindung betrifft eine Leuchtbox zum Hinterleuchten insbesondere von Plakaten oder Diapositiven.

Leuchtboxen finden zur Anbringung von Plakaten Verwendung. Eine bekannte Leuchtbox (CH 667 345 A5) weist einen rechteckigen Rahmen auf, der eine Vorderwand und eine Rückwand umfaßt. Die Vorderwand besteht aus zwei übereinanderliegenden Glasplatten, von denen die gehäuseinnere Glasplatte eine Licht teilweise reflektierende Beschichtung trägt. Zwischen den Glasplatten ist ein als Diapositivfilm ausgebildetes Plakat eingelegt. Die Rückwand weist ebenfalls eine reflektierende Beschichtung auf. Die von einer im Rahmen angeordneten Leuchtstofflampe ausgehenden Lichtstrahlen werden an den Beschichtungen reflektiert, wobei ein Teil des Lichts die Glasplatte durchdringt und das Plakat hinterleuchtet. Insbesondere bei einer sehr flachen Bauweise der Leuchtbox sowie bei großen Außenabmessungen kann das Plakat ungleichmäßig ausgeleuchtet werden. Die lampenfernen Bereiche haben dabei eine geringere Leuchtdichte als die in unmittelbarer Nähe zur Lampe liegenden Flächen.

Desweiteren ist eine Vorführvorrichtung (DE-OS 14 72 474) bekannt, die eine Beleuchtungseinrichtung zur Beleuchtung einer mit Facetten oder Schrägflächen versehenen reflektierenden Fläche aufweist. Die Facetten und Schrägflächen sind auf der Reflektorfläche in bestimmten unterschiedlichen Winkeln zueinander angeordnet und werden derart beleuchtet, daß der auf die Reflektorfläche blickende Betrachter den Eindruck eines Bewegungs- oder Belebungseffekts hat. Vor der Reflektorfläche ist ein keilförmiges Lichtleitelement angeordnet, das eine der Beleuchtungseinrichtung zugewandte Lichteintrittsseite aufweist und dessen Stärke sich mit zunehmendem Abstand von der Lichteintrittsseite verringert. Das keilförmige Lichtleitelement besteht aus einem Block von mehreren parallel zueinander liegenden Teilplatten und ist an seiner der Reflektorfläche zugewandten Seite schräg abgeschnitten. Dies ist fertigungstechnisch recht aufwendig, da zum einen jede Platte an ihrer einen Endfläche entsprechend geschnitten werden muß und zum anderen sichergestellt sein muß, daß die schrägverlaufenden Endflächen einer Lichtleiterplatte exakt in die schrägverlaufende Endfläche der benachbarten Lichtleiterplatte übergeht, die Endflächen sämtlicher Lichtleiterplatten also in einer gemeinsamen Ebene liegen und eine einheitliche Flächen bilden müssen. Bei der bekannten Vorrichtung erfolgt eine Hinterleuchtung der die Information tragenen Betrachterfläche nicht; das Lichtleitelement ist vielmehr vor der Betrachterfläche angeordnet, wobei die (der Betrachterfläche zugewandte) Lichtaustrittsflächen des Lichtelements parallel zur Betrachterfläche verlaufen.

Aus US 4 794 492 und DE-GM 87 06 167 ist jeweils eine Leuchtbox bekannt, die einen Kasten aufweist, der im Randbereich eine Leuchtstofflampe enthält und dessen Lichtaustrittsfläche von einer lichtstreuenden Diffusionsplatte gebildet ist. Das Plakat wird auf der Diffusionsplatte befestigt und von dem Licht der Lampe hinterleuchtet. In dem Kasten ist eine schräg zu der Diffusionsplatte stehende Reflektorfläche angeordnet. Zwischen der Reflektorfläche und der Diffusionsplatte befindet sich ein einstückiges keilförmiges Lichtleitelement, das eine der Lampe zugewandte Lichteintrittsseite aufweist und dessen Stärke sich mit zunehmendem Abstand von der Lampe verringert. Bei einstückigen keilförmigen Lichtleitelementen ist zu beobachten, daß die Intensität des im Bereich der Keilspitze in Richtung auf die Reflektorfläche austretenden Lichts stark abnimmt. Der Reflektor ist also über seine gesamte Fläche betrachtet nicht gleichmäßig ausgeleuchtet, weshalb das vom Reflektor reflektierte und über die Lichtaustrittsfläche austretende Licht im lampenfernen Bereich merklich schwächer ist.

Der Erfindung liegt die Aufgabe zugrunde, eine Leuchtbox zu schaffen, die eine möglichst gleichmäßige Lichtverteilung bei großer Leuchtdichte hat, wobei örtliche Leuchtdichtekonzentrationen vermieden werden.

Zur Lösung dieser Aufgabe wird mit der Erfindung eine Leuchtbox vorgeschalten mit mindestens einem, eine langgestreckte Lichtquelle enthaltenden Kasten, der eine Lichtaustrittsöffnung aufweist, einer in dem Kasten angeordneten Reflektorfläche, und einem zwischen der Reflektorfläche und der Diffusionsscheibe angeordneten Lichtleitelement, das eine der Lichtquelle zugewandte Lichteintrittsseite aufweist und dessen Stärke sich mit zunehmendem Abstand von der Lichtquelle verringert, wobei das Lichtleitelement aus mehreren übereinanderliegenden und parallel zueinander angeordneten plattenförmigen Lichtleitern unterschiedlicher Längen besteht und die plattenförmigen Lichtleiter schräg zur Reflektorfläche hin verlaufen sowie rechtwinklig abschließende Lichtaustrittsendflächen haben, die in einem Winkel kleiner als 90° zur Reflektorfläche verlaufen.

Bei der erfindungsgemäßen Leuchtbox gelangt das Licht der Lichtquelle über separate Lichtleiterplatten auf die Reflektorfläche, bei der es sich vorzugsweise um eine diffus reflektierende Fläohe handelt. Mehrere Lichtleiterplatten unterschiedlicher Länge sind übereinanderliegend und parallel (ohne optisch verbunden zu sein) zueinander angeordnet und bilden das Lichtleitelement. Die Längsabmessungen der plattenförmigen Lichtleiter nehmen, von der Lichtquelle aus betrachtet, stufenweise ab. Die übereinanderliegenden Lichtleiter bilden eine treppenförmige Anordnung, wobei die den Lichteintrittsenden der Lichtleiter gegenüberliegenden Lichtaustrittsenden jeweils einen unterschiedlichen Abstand zur Lichtquelle haben. Die Lichtaustrittsenden der plattenförmigen Lichtleiter sind rechtwinklig abgeschnitten, die Lichtaustrittsendflächen der Lichtleiter verlaufen also einerseits rechtwinklig zur Plattenlängserstreckung und andererseits in einem spitzen Winkel (kleiner als 90°) zur Reflektorfläche. Die Lichtleiter verlaufen schräg zur Reflektorfläche hin auf diese zu, so daß deren Lichtaustrittsenden der Reflektorfläche zugewandt sind. Das aus den Lichtleitern austretende Licht wird an der Reflektorfläche in Richtung auf die Lichtaustrittsfläche reflektiert.

Durch die einzelnen Lichtleiter wird das Lampenlicht mit gleicher Stärke sowohl in die lampennahen als auch die lampenfernen Bereiche des Kastens geführt. Die Lichtleiter, die vorzugsweise untereinander gleiche Materialstärke haben, bewirken eine gleichmäßige Verteilung des Lampenlichts längs der Reflektorfläche, ohne daß das im lampenfernen Bereich auf die Reflektorfläche auftreffende Licht schwächer ist als das im lampennahen Bereich auf die Reflektorfläche auftreffende Licht. Die das Licht nahezu verlustlos führenden Lichtleiter erlauben den Bau von Leuchtboxen mit großen Außenabmessungen bei relativ hoher Lichtausbeute. Die flachen plattenförmigen Lichtleiter machen ferner eine geringe Bautiefe der Leuchtbox möglich. Das rechtwinklige Abschneiden der Lichtleiterplatten auch an deren Lichtaustrittsenden bietet darüberhinaus fertigungstechnische Vorteile, denn eine Lichtleiterplatte mit rechtwinkliger Endfläche ist einfacher und kostengünstiger herzustellen als eine Lichtleiterplatte, bei der eine Endfläche schräg verläuft.

Die Reflektorfläche ist vorzugsweise parallel zur Lichtaustrittsfläche angeordnet, so daß der Abstand zwischen der Reflektorfläche und der Lichtaustrittsfläche überall gleich ist. Das Licht, das überall an der Reflektorfläche in gleicher Weise reflektiert wird, legt also unabhängig davon, wo es auf die Reflektorfläche auftrifft, stets einen gleichlangen Weg zurück. Damit tritt das Licht gleichmäßiger verteilt über die Lichtaustrittsseite aus, insbesondere dann, wenn die Reflektorfläche das Licht diffus reflektiert, das von den Lichtleiterplatten zur Reflektorfläche geleitete und dort reflektierte Licht also überall im gleichen Maße aufgefächert wird.

Die parallele Anordnung von Reflektorfläche und Lichtaustrittsfläche erlaubt zudem einen einfachen Aufbau der Leuchtbox. Reflektorfläche und Lichtaustrittsfläche können von der Vorder- und Rückwand eines kastenförmigen Gehäuses gebildet sein.

Vorzugsweise reichen die Lichtleiterplatten bis an die Reflektorfläche heran. Das Lichtleitelement liegt also mit seiner treppenförmigen Lichtaustrittsunterseite auf der Reflektorfläche auf, wobei die Lichtaustrittsendflächen der Lichtleiterplatten, die Lichtleiterplatten und die Reflektorfläche mehrere nebeneinanderliegende keilförmige Räume begrenzen.

Vorteilhafterweise ist die Lichtaustrittsfläche des Kastens von einer transparenten Diffusionsplatte gebildet. Eine derartige Diffusionsplatte sollte immer dann verwendet werden, wenn das durchleuchtete Plakat selbst keine oder nur eine unzureichende Lichtstreuung bewirkt. Die Lichtleiterplatten sorgen in erster Linie dafür, daß das Licht auf die Reflektorfläche gerichtet wird, wobei es im lampenfernen Bereich mit im wesentlichen der gleichen Intensität auf die Reflektorfläche auftrifft, wie im lampennahen Bereich. Der gesamte Bereich der Reflektorfläche zwischen dem Lichtaustrittsende einer Lichtleiterplatte und demjenigen einer benachbarten Lichtleiterplatte wird allerdings nicht gänzlich gleichmäßig stark ausgeleuchtet. Bei Betrachtung der Reflektorflächen sind also - wenn auch relativ schwach - Hell/Dunkel-Streifen zu erkennen. Sofern das Plakat selbst lichtstreuende Eigenschaften aufweist, ist eine separate Diffusionsplatte an der Lichtaustrittsfläche des Kastens nicht erforderlich; auf die Diffusionsplatte sollte in einem solchen Fall verzichtet werden, da die Helligkeit des Lichts bei Verwendung einer Diffusionsplatte abnimmt. In jedem Fall aber führt eine Diffusionsplatte zu einer noch gleichmäßigeren Verteilung des über die Lichtaustrittsfläche aus der Leuchtbox austretenden Lichts.

Zweckmäßigerweise ist ein bogenförmiger Reflektor vorgesehen, der das Lampenlicht auf die Lichteintrittsseite des Lichtleitelements konzentriert und die Leuchtdichte an den Lichtaustrittsenden der Lichtleiter erhöht. Da der Reflektor vorteilhafterweise die Lichtquelle teilweise umschließt und nur zur Lichteintrittsseite des Lichtleitelements geöffnet ist, schirmt er die lampennahen Bereiche der Diffusionsscheibe gegen direkte Bestrahlung ab. Die Stellen, an denen sich die Lampen befinden, können somit von außen durch das Plakat hindurch nicht erkannt werden.

Vorzugsweise sind in der Leuchtbox zwei langgestrecke Lampen zusammen mit den zugehörigen Lichtleitelementen angeordnet. Die beiden Lichtleitelemente erstrecken sich von entgegengesetzten Seiten her jeweils bis etwa zur Mitte der Reflektorfläche.

Die Leuchtbox kann nicht nur zur Anbringung von Plakaten, sondern auch als Hintergrundbeleuchtung für Anzeigetafeln eingesetzt werden.

Im folgenden wird unter Bezugnahme auf die Zeichnungen ein Ausführungsbeispiel der Erfindung näher erläutert.

Es zeigen:

Fig. 1    eine perspektivische Darstellung einer Leuchtbox, teilweise geschnitten, und

Fig. 2    einen Längsschnitt durch die Leuchtbox von Fig. 1.

Die Leuchtbox besteht aus einem rechteckigen flachen Kasten 1 mit einer Rückwand 2 und vier umlaufenden Seitenwänden 3,4. Die Vorderseite 5 des Kastens 1 weist einen rechteckigen Ausschnitt 6 auf, der die Lichtaustrittsfläche des Kastens 1 begrenzt. Die Lichtaustrittsfläche ist von einer Streu- oder Diffusionsplatte 7 beispielsweise aus opalem Mattglas verschlossen. Auf der Diffusionsplatte 7 kann ein durchsichtiges Plakat befestigt werden, das von einer in den Fign. nicht dargestellten durchsichtigen Scheibe bedeckt wird. Die Innenseite der Rückwand 2 weist eine Reflektorfläche 8 auf, die eine diffuse Reflektion, also eine Lichtstreuung des reflektierten Lichts, bewirkt. Es kann aber auch eine sehr glatte, verspiegelte Reflektorfläche vorgesehen sein, an der das Licht nicht diffus reflektiert wird.

Die Leuchtbox ist in Längsrichtung symmetrisch aufgebaut. Im Inneren des Kastens 1 ist am oberen und unteren Ende in der Nähe der jeweiligen Seitenwand 3 je eine langgestreckte Lampe 9, z.B. eine Leuchtstofflampe, angeordnet. Neben jeder Lampe 9 befindet sich zwischen den Seitenwänden 4 des Kastens 1 ein Lichtleitelement 10,10', dessen Stärke sich mit zunehmendem Abstand von der Lampe 9 verringert. Das Lichtleitelement 10 weist eine der Lampe 9 zugewandte Lichteintrittsseite 11 und eine der Reflektorfläche 8 zugewandte Lichtaustrittsseite 12 auf, die sich in Längsrichtung bis zur Mitte des Kastens 1 erstreckt.

Das Lichtleitelement 10 besteht aus übereinandergestapelten plattenförmigen Lichtleitern 13 mit gleicher Breite und unterschiedlichen Längen, die schräg zu der Reflektorfläche 8 verlaufen. Der Winkel zwischen den rechteckigen Lichtleitern 13 und der Reflektorfläche beträgt ca. 10°. Die Längsabmessungen der plattenförmigen Lichtleiter nehmen stufenweise ab, so daß die übereinandergestapelten Lichtleiter eine treppenförmige Anordnung mit gleichmäßiger Schrittweite und Stufenhöhe bilden. Dabei ist der Lichtleiter mit der kleinsten Länge der Reflektorfläche am nächsten. Auf der Lampe 9 zugewandten Seite haben die Lichtleiter 13 eine rechtwinklig abschließende Lichteintrittsendfläche 14, in die das Licht der Lampe 9 einfällt, und an den gegenüberliegenden Stirnseiten eine rechtwinklig abschließende Lichtaustrittsendfläche 15, aus der das Licht aus den Lichtleitern austritt und auf die Reflektorfläche 8 fällt. Der Winkel zwischen der Lichtaustrittsendfläche 15 und der Reflektorfläche 8 ist kleiner als 90° und die unteren Kanten 23 der Lichtaustrittsenden 16 liegen auf der Reflektorfläche 8 auf.

Die langgestreckte Lampe 9 wird von einem Reflektor 17 teilweise umschlossen. Der Reflektor 17 besteht aus einem im wesentlichen U-förmig gebogenen Blechmantel 18 mit einer reflektierenden Innenbeschichtung 19. Der Reflektor 17 ist zur Lichteintrittsseite 11 des Lichtleitelements 10 geöffnet, wobei das Lichtleitelement 10 in die langgestreckte Öffnung hineinragt. Die Ränder 21 des Blechmantels 18 sind bis an das Lichtleitelement herangeführt, um die Diffusionsplatte 7 gegen direktes Licht von der Lampe 9 abzuschirmen.

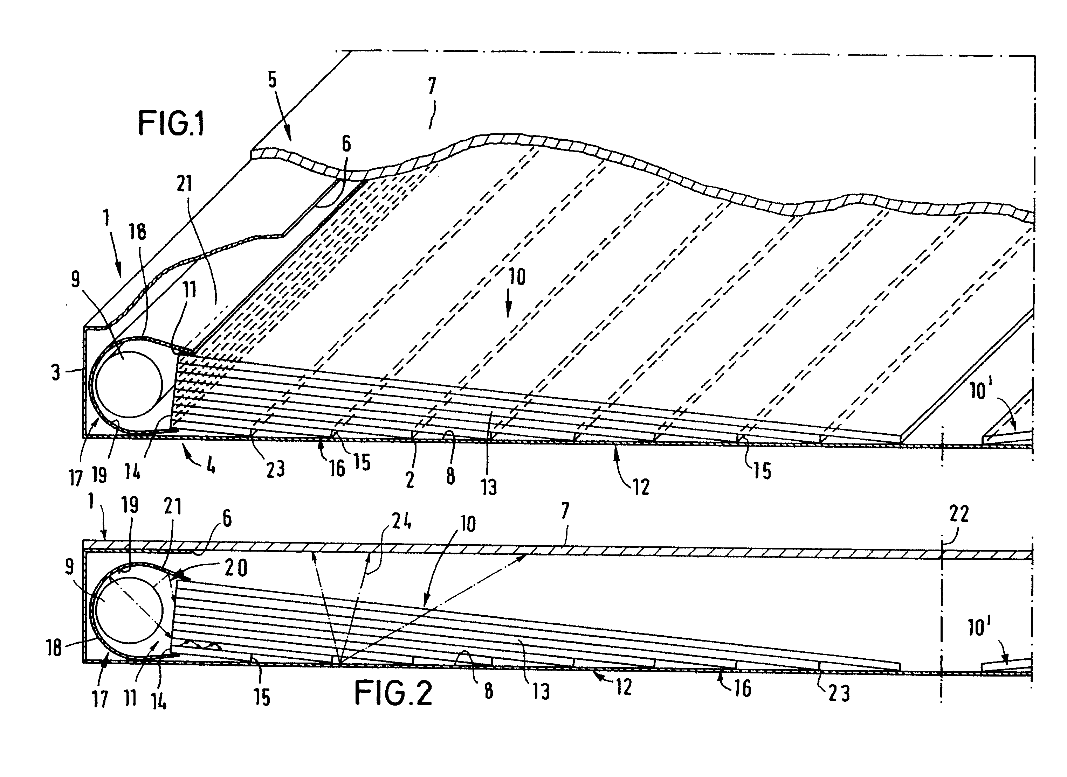

Der Verlauf der von der Lampe 9 ausgehenden Lichtstrahlen ist in Fig. 2 durch Pfeile angedeutet. Das Licht der Lampe 9 wird von dem Reflektor 17 reflektiert und auf die Lichteintrittsseite 11 des Lichtleitelements 10 konzentriert. Das Licht fällt auf die Lichteintrittsenden 14 der aus hochtransparentem optischen Material bestehenden Lichtleiter 13. Die Lichtstrahlen treffen in sehr flachem Winkel auf die Seitenflächen des Lichtleiters 13 und das Licht wird in den Lichtleitern nahezu verlustlos durch vielfache Totalreflektion an den Seitenflächen der Lichtleiter übertragen. Die aus den Lichtaustrittsenden 16 der Lichtleiter 13 in unterschiedlichem Winkel austretenden Lichtstrahlen fallen auf die Reflektorfläche 8 an der Rückwand 2 des Kastens 1 und werden in unterschiedliche Richtungen reflektiert. Die reflektierten Strahlen 24 treffen in einem sehr steilen Einfallswinkel auf die Seitenflächen der plattenförmigen Lichtleiter 13, so daß keine Totalreflektion an den Seitenflächen stattfindet. Das Licht tritt durch die Lichtleiter 13 hindurch und fällt auf die lichtstreuende Diffusionsplatte 7, vor der sich das lichtdurchlässige Plakat befindet. Da die Reflektorfläche 8 eine diffuse Reflektion verursacht, wird das über die Lichtleiter längs der Reflektorfläche verteilte Licht gleichmäßig gestreut und eine homogene Lichtverteilung längs der Diffusionsplatte 7 bei hoher Leuchtdichte erreicht.

In Fig. 2 ist die Mitte der Länge der Leuchtbox durch die Linie 22 gekennzeichnet. Die dargestellte Lampe 9 leuchtet im wesentlichen die eine Hälfte des Kastens aus, während die andere Hälfte von der gegenüberliegenden, in den Fign. nicht dargestellten Lampe am anderen Ende des Kastens 1 ausgeleuchtet wird. Neben jeder Lampe 9 ist ein Lichtleitelement 10,10' angeordnet, dessen Lichteintrittsseite 11 der Lampe zugewandt ist. Die Lichtleitelemente 10,10' erstrecken sich von entgegengesetzten Seiten her jeweils bis etwa zur Mitte des Kastens 1. Die Lichtleiter 10,10' bewirken eine gleichmäßige Verteilung des Lichts im Kasten 1 und damit eine gleichmäßige Ausleuchtung der Diffusionsplatte 7.

**Patentansprüche**

1. Leuchtbox zur Hinterleuchtung insbesondere von Plakaten oder Diapositiven, mit

   mindestens einem, eine langgestreckte Lichtquelle (9) enthaltenden Kasten (1), der eine Lichtaustrittsfläche aufweist,

   einer in dem Kasten (1) angeordneten Reflektorfläche (8),

   und einem zwischen der Reflektorfläche (8) und der Lichtaustrittsfläche angeordneten Lichtleitelement (10), das eine der Lichtquelle (9) zugewandte Lichteintrittsseite (11) aufweist und dessen Stärke sich mit zunehmendem Abstand von der Lichtquelle (9) verringert,

   **dadurch gekennzeichnet,**

   daß das Lichtleitelement (10) aus mehreren übereinanderliegenden und parallel zueinander angeordneten plattenförmigen Lichtleitern (13) unterschiedlicher Längen besteht und

   daß die plattenförmigen Lichtleiter (13) schräg zur Reflektorfläche (8) hin verlaufen und rechtwinklig abschließende Lichtaustrittsendflächen (15) haben, die in einem Winkel kleiner als 90° zur Reflektorfläche (8) verlaufen.

2. Leuchtbox nach Anspruch 1, dadurch gekennzeichnet, daß die Lichtaustrittsfläche parallel zur Reflektorfläche (8) verläuft.

3. Leuchtbox nach Anspruch 1 oder 2, dadurch gekennzeichnet, daß die Lichtaustrittsfläche von einer lichtstreuenden Diffusionsplatte (7) gebildet ist.

4. Leuchtbox nach einem der Ansprüche 1 bis 3, dadurch gekennzeichnet, daß ein die Lichtstrahlen der Lichtquelle (9) auf die Lichteintrittsseite (11) des Lichtleitelements (10) konzentrierender Reflektor (17) vorgesehen ist.

5. Leuchtbox nach Anspruch 4, dadurch gekennzeichnet, daß der Reflektor (17) die Lichtquelle (9) teilweise umschließt und nur zur Lichteintrittsseite (11) des Lichtleitelements (10) offen ist.

6. Leuchtbox nach einem der Ansprüche 1 bis 5, dadurch gekennzeichnet, daß je eine langgestreckte Lichtquelle (9) mit einem Lichtleitelement (10) am Ende des Kastens (1) angeordnet ist und daß sich die Lichtleitelemente (10) beider Lampen jeweils bis zur Mitte der Reflektorfläche (8) erstrecken.

FIG.1

FIG.2

EP 0 438 768 A1

Europäisches
Patentamt

**EUROPÄISCHER
RECHERCHENBERICHT**

Nummer der Anmeldung

**EP 90 12 5320**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 167 721   (MITSUBISHI RAYON CO.)<br>* Seite 6, Zeilen 7-25; Seite 7, Zeilen 1-7; Seite 14, Zeilen 11-15; Figuren 2,4,11b * | 1-3,6 | G 09 F<br>13/18 |
| Y | | 4,5 | |
| | – – – | | |
| D,Y | GB-A-1 130 601   (M. DE PORAY)<br>* Figure 14<br>* & DE-A-1 472 474 | 4,5 | |
| | – – – – – | | |

| RECHERCHIERTE SACHGEBIETE (Int. Cl.5) |
|---|
| G 09 F |

Der vorliegende Recherchenbericht wurde für alle Patentansprüche erstellt

| Recherchenort | Abschlußdatum der Recherche | Prüfer |
|---|---|---|
| Den Haag | 15 April 91 | GALLO G.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

---

& : Mitglied der gleichen Patentfamilie, übereinstimmendes Dokument